Europäisches Patentamt

European Patent Office

Office européen des brevets

(11) Veröffentlichungsnummer: **0 297 466 B1**

# EUROPÄISCHE PATENTSCHRIFT

(45) Veröffentlichungstag der Patentschrift: **23.09.92**

(51) Int. Cl.5: **B23D 47/04**, B23Q 7/06

(21) Anmeldenummer: **88110158.8**

(22) Anmeldetag: **25.06.88**

(54) **Vorrichtung zum Vorschieben mehrerer, nebeneinander angeordneter Werkstücke.**

(30) Priorität: **30.06.87 DE 3721532**

(43) Veröffentlichungstag der Anmeldung:
**04.01.89 Patentblatt 89/01**

(45) Bekanntmachung des Hinweises auf die
Patenterteilung:
**23.09.92 Patentblatt 92/39**

(84) Benannte Vertragsstaaten:
**AT BE CH ES FR GB IT LI NL**

(56) Entgegenhaltungen:
CA-A- 893 510
DE-A- 2 914 359
US-A- 3 661 277
US-A- 4 204 788

(73) Patentinhaber: **Chr. Eisele Maschinenfabrik
GmbH & Co. KG.
Nürtinger Strasse 9 - 15
W-7316 Köngen(DE)**

(72) Erfinder: **Lauffer, Adelbert
Odenwaldstrasse 2
W-7410 Reutlingen 28(DE)**

(74) Vertreter: **Hoeger, Stellrecht & Partner
Uhlandstrasse 14 c
W-7000 Stuttgart 1(DE)**

## Beschreibung

Die Erfindung betrifft eine Vorrichtung nach dem Oberbegriff des Patentanspruchs 1.

Bei bekannten Vorrichtungen dieser Art können nur gleichlange Werkstücke vorgeschoben werden, weil ein längeres Werkstück, das bereits am Anschlag anliegt, ein Angreifen des Schiebers an einem kürzeren Werkstück verhindert, so daß dieses nicht ordnungsgemäß an den Anschlag anlegbar ist. Außerdem kann es bei den bekannten Vorrichtungen dieser Art häufig zu Betriebsstörungen kommen, wenn ein Werkstück mit übermäßiger Kraft an den Anschlag angepreßt wird.

Aus US-A-4 204 788 ist eine Vorrichtung zum Zusammenschieben eines Vorrats aus Stangen, Rohren oder dergleichen bekannt, bei der ein einen Schieber tragender Schlitten auf einer Laufschiene geradlinig geführt und von einem Motor hin- und hergehend angetrieben ist.

Der Erfindung liegt die Aufgabe zugrunde, den geschilderten Mängeln abzuhelfen und eine gattungsgemäße Vorrichtung so zu verbessern, daß einerseits auch Werkstücke unterschiedlicher Länge ordnungsgemäß an den Anschlag angelegt werden können, ohne daß dabei zerstörerische Kräfte auftreten, wenn das längste Werkstück angelegt ist.

Die Aufgabe wird erfindungsgemäß dadurch gelöst, daß der Schieber nebeneinander mehrere, an das dem Anschlag abgekehrte Werkstückende anlegbare Lamellen aufweist, die über eine vorgegebene Ausgleichsstrecke parallel zur Vorschubrichtung der Werkstücke hin-und herverschieblich sind; daß die Ausgleichsstrecke größer als der größte auftretende Längenunterschied der Werkstücke ist; daß die Lamellen durch einen Kraftspeicher in Vorschubrichtung vorgespannt sind, und die vom Kraftspeicher ausgeübte Kraft größer als die für den Vorschub der Werkstücke erforderliche Kraft ist, und daß am Schieber ein erster Schalter angeordnet ist, der den Schieberantrieb abschaltet, sobald eine der Lamellen entgegen der Vorschubrichtung über die Ausgleichsstrecke hinaus verschoben ist.

Die nachstehende Beschreibung einer bevorzugten Ausführungsform der Erfindung dient im Zusammenhang mit beiliegender Zeichnung der weiteren Erläuterung.

Es zeigen:

Fig. 1    Eine schaubildliche und schematische Ansicht einer Ablängsäge;

Fig. 2    eine Seitenansicht einer bevorzugten Ausführungsform einer Vorschubvorrichtung;

Fig. 3    eine Schnittansicht der Vorrichtung entlang der Linie 3-3 in Fig. 2;

Fig. 4    eine mehrfach geschnittene Ansicht der Vorrichtung in Richtung des Pfeiles A in Fig. 2 und

Fig. 5    eine Ansicht ähnlich Fig. 3 in einer anderen Betriebsstellung.

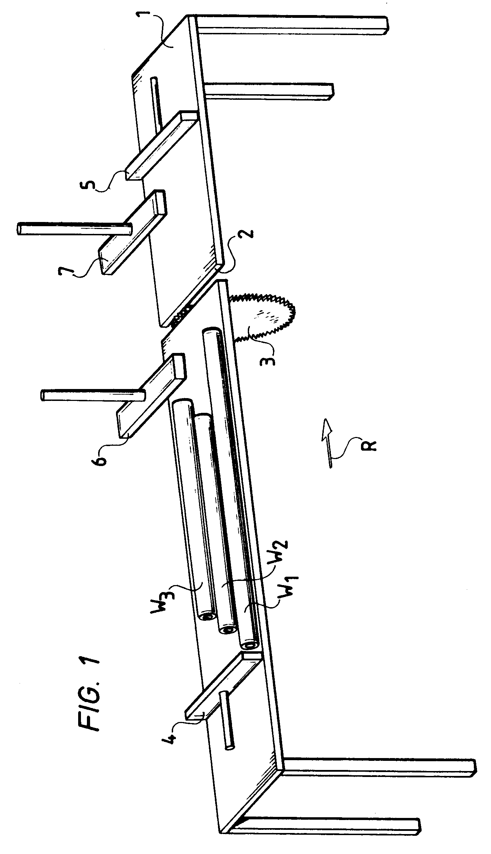

Anhand der schematischen Fig. 1 wird zunächst der grundsätzliche Aufbau und die grundsätzliche Wirkungsweise einer Ablängsäge mit Vorschubeinrichtung zum gleichzeitigen Behandeln mehrerer Werkstücke erläutert. Ein als Werkstückauflage dienender Tisch 1 weist einen Schlitz 2 auf, in dem ein drehend angetriebenes Kreissägeblatt 3 auf- und abbeweglich ist. Auf der Auflage 1 liegen mehrere Werkstücke W1, W2 und W3 nebeneinander, von denen mittels des Kreissägeblattes 3 gleich lange Abschnitte abgetrennt werden sollen. Hierzu werden die Werkstücke W durch einen Schieber 4 in Vorschubrichtung R vorgeschoben und mit ihren vorderen Enden an einen Anschlag 5 angelegt, wobei die Länge der abzutrennenden Abschnitte durch den Abstand des Anschlages 5 vom Kreissägeblatt festgelegt ist. Zwei vertikal auf- und abbewegliche Spannbacken 6, 7 dienen der Festspannung der Werkstücke während des Sägens.

Man erkennt aus der Anordnung gemäß Fig. 1, daß beim Anliegen des längsten Werkstücks W1 das weitere Vorrücken des Schiebers 4 in Vorschubrichtung R blockiert ist und somit die kürzeren Werkstücke W2, W3 nicht mehr in Anlage an den Anschlag 5 gebracht werden können. Außerdem können dann, wenn das längste Werkstück W1 zwischen dem Anschlag 5 und dem Schieber 4 eingespannt ist, ohne daß dessen Antriebsmotor rechtzeitig abgeschaltet wird, übermäßige Kräfte auftreten, die zu einer Zerstörung der Vorrichtung führen können. Diesen Mängeln abzuhelfen, ist das Ziel der Erfindung.

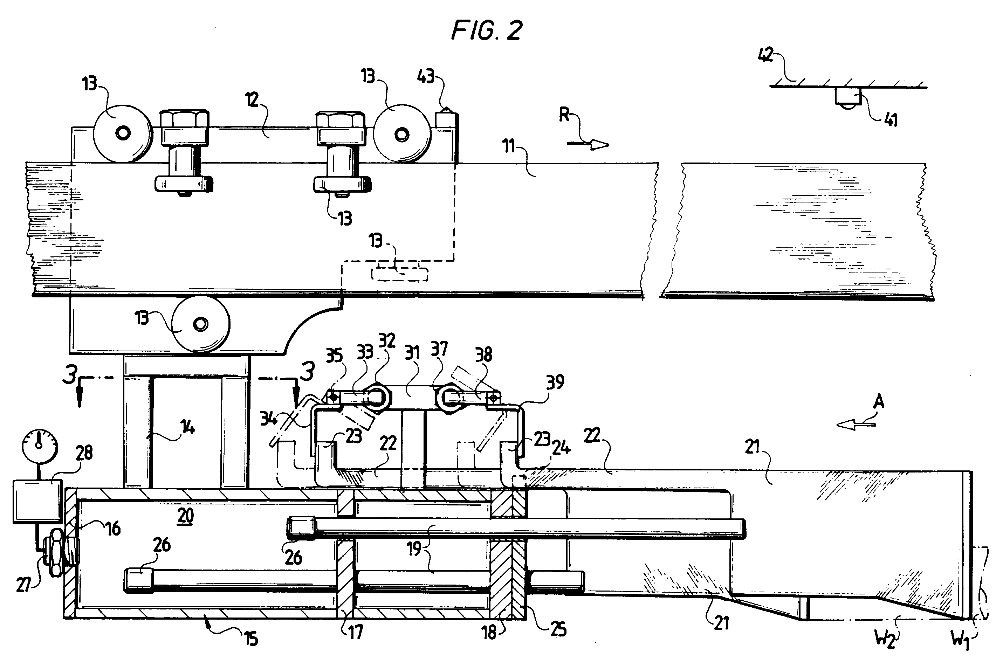

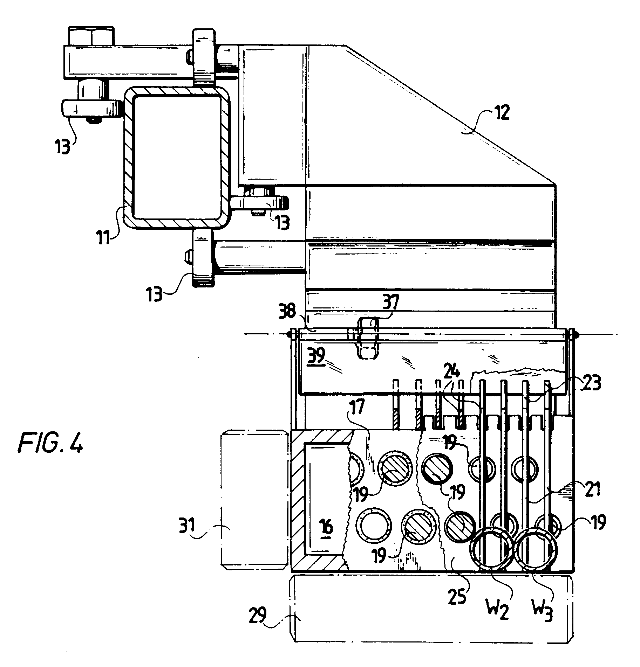

Die Fig. 2, 3 und 4 zeigen den Aufbau einer erfindungsgemäßen Vorrichtung zum Vorschieben mehrerer nebeneinander angeordneter Werkstücke W1, W2, W3 und zum Anlegen der einen Enden dieser Werkstücke an einen gemeinsamen Anschlag 5. An einer als Geradführung dienenden Laufschiene 11 ist ein als fahrbarer Schlitten ausgebildeter Schieber 12 hin- und herbeweglich. Der Schlitten 12 wird mit Hilfe von Rollen 13 in bekannter Weise an der Laufschiene 11 geführt und mit Hilfe eines (nicht dargestellten) Antriebsmotors auf dieser Schiene hin- und herbewegt. Der Schieber 12 ist mit Hilfe eines Traggestells 14 starr mit einem hohlen Kasten 15 verbunden, der eine Rückwand 16, eine Zwischenwand 17 und eine Vorderwand 18 aufweist. In entsprechenden, miteinander ausgerichteten Bohrungen der Zwischenwand 17 und Vorderwand 18 sind in zwei zueinander parallelen Lagen Stangen 19 gleitverschieblich und abgedichtet gelagert. An ihren frei aus dem Kasten 15 herausragenden Enden tragen die Stangen 19 vertikal ausgerichtete Lamellen 21, die mit nach rückwärts abstehenden Armen 22 ausgestattet sind, von welchen wiederum kurze Nasen 23 nach oben abstehen. Die Arme 22 sind in Kerben 24 einer mit der Vorderwand 18 verbundenen Platte 25 (Fig. 4) gleitverschieblich geführt. Die rückwärtigen Enden der Stangen 19 sind mit elastischen Puffern 26 versehen, mit denen die Stangen 14 federnd auf die Rückwand 16 auftreffen können. Der zwischen Rückwand 16 und Zwischenwand 17 des Kastens 15 gelegene Raum 20 ist über einen Einlaßstutzen 27 an eine (schematisch dargestellte) Gasdruckquelle 28 angeschlossen, die ein Gas mit einstellbarem, konstantem Druck liefert. Somit steht auch der Raum 20 zwischen Rückwand 16 und Zwischenwand 17 ständig unter einem konstanten Gasdruck bestimmter Höhe und wirkt somit beim Einschieben der rückwärtigen, mit den Puffern 26 versehenen Enden der Stange 19 als Gasfeder, durch welche auf diese Stangen bei ihrem Eindringen in den erwähnten Raum eine konstante, einstellbare Gegenkraft ausgeübt wird.

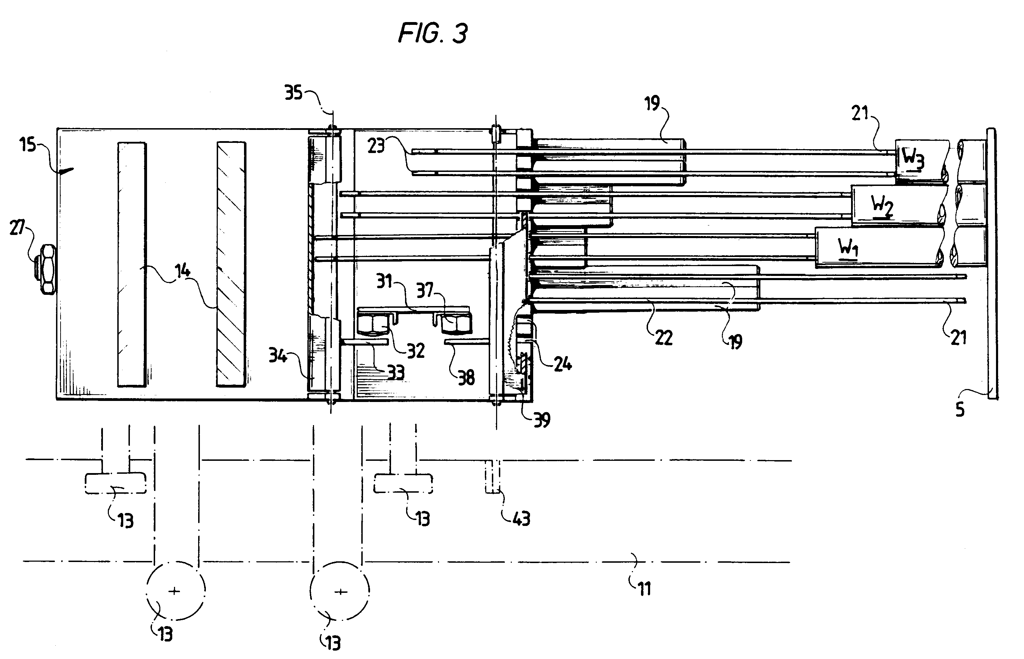

Die vorzuschiebenden Werkstücke W (Fig. 3 und 4) ruhen auf einer herkömmlichen Unterlage auf, beispielsweise auf Rollen 29, 31, die in Fig. 4 strichpunktiert angedeutet sind. Wenn bei einer Bewegung des Schiebers 12 in Vorschubrichtung R die Vorderkanten der Lamellen 21 auf das ihnen zugewandte Ende eines Werkstücks W auftreffen, wird das betreffende Werkstück in Vorschubrichtung mitgenommen, weil die von der Gasfeder (Raum 20) aufgebrachte Gegenkraft größer als die für den Werkstücktransport erforderliche Vorschubkraft ist. Wie aus Fig. 3 und 4 ersichtlich, haben die einzelnen Lamellen 21 einen verhältnismäßig kleinen Abstand voneinander, so daß auch Werkstücke kleinen Durchmessers, z. B. Metallrohre, Metallstangen oder dergleichen mitgenommen werden können. Je nach dem Durchmesser der aneinander anliegenden Werkstücke können eine oder mehrere Lamellen 21 am Werkstück angreifen und dieses vorschieben.

Wenn, wie in Fig. 3 dargestellt, Werkstücke unterschiedlicher Länge an den Anschlag 5 angelegt werden sollen und diese Werkstücke mit ihren rückwärtigen Enden verschiedene Abstände vom Schieber 12 haben, greifen die betreffenden Lamellen 21 nacheinander an den Werkstücken an und setzen diese in Richtung Anschlag 5 in Bewegung. Sobald das längste Werkstück - z. B. das Werkstück W1 - mit seinem vorderen Ende am Anschlag 5 anliegt, bewegen sich die an diesem Werkstück W1 angreifenden Lamellen 21 entgegen der Vorschubrichtung nach rückwärts, wobei die Enden der Stangen 19 in den Raum 20 eindringen. Bei weiter in Vorschubrichtung R vorrückendem Schieber 12 legen sich weitere Lamellen 21 an das nächstlängere Werkstück W2 an und bringen auch dieses zur Anlage am Anschlag 5, worauf sich die betreffenden Lamellen 21 ebenfalls bei weiter vorrückendem Schlitten nach einwärts bewegen. Entsprechendes gilt für das Werkstück W3 und die an ihm angreifenden Lamellen 21. Sobald alle drei Werkstücke am Anschlag 5 anliegen, wird bei weiter in Vorschubrichtung vorwärts bewegtem Schieber 12 in sogleich noch zu beschreibender Weise durch die am längsten Werkstück W1 angreifenden Lamellen 21 ein Schalter betätigt, der den Antrieb des Schlittens 12 abschaltet. Nunmehr können die im Zusammenhang mit Fig. 1 erwähnten Spannbacken 6, 7 in Wirkstellung gebracht und der Sägeschnitt ausgeführt werden.

Wie insbesondere Fig. 2 und 3 zeigen, ist mittels eines T-förmigen Ständers 31 am Kasten 15 ein berührungsloser Schalter 32, beispielsweise in Gestalt einer Reflexlichtschranke befestigt, der von einer schwenkbaren Fahne 33 betätigt wird. Die Fahne 33 ist mit dem einen Schenkel einer als Winkeleisen ausgebildeten Klappe 34 starr verbunden, die sich quer über den Kasten 15 erstreckt und um eine Achse 35 verschwenkbar ist. Die Klappe 34 nimmt unter ihrem Eigengewicht normalerweise die in Fig. 2 gezeigte Stellung ein. Sie könnte in diese Stellung auch durch eine Feder vorgespannt sein. Wenn eine der Lamellen 21 entsprechend weit zurückgeschoben ist, greift die an ihrem Arm 22 vorgesehene Nase 23 an dem nach unten gerichteten Schenkel der Klappe 34 an und verschwenkt die Klappe und mit ihr die Fahne 33, so daß der Schalter 32 ausgelöst und hierdurch der Antriebsmotor des Schiebers 12 abgeschaltet wird. Diese Abschaltstellung ist in Fig. 2 strichpunktiert eingezeichnet. Wie Fig. 3 zeigt, wird diese Abschaltung durch diejenigen Lamellen bewirkt, die am längsten Werkstück W1 anliegen, weil diese zuerst so weit nach rückwärts verschoben werden, daß sie mit ihren Nasen 23 die Klappe 34 und damit den Schalter 32 betätigen können. Nötigenfalls können die Lamellen 21 durch das Auftreffen der Puffer 26 auf der Rückwand 16 des Kastens 15 endgültig abgebremst werden.

Der Schalter 32 dient nicht nur der rechtzeitigen Abschaltung des Schieberantriebs, sondern wirkt zusätzlich auch als Sicherheitsschalter, weil er durch das rechtzeitige Abschalten des Schiebers 12 bewirkt, daß keine unerwünscht hohen Kräfte über die ihn auslösenden Lamellen 21 auf das betreffende Werkstück W1 übertragen werden.

Nachdem die vom Kreissägeblatt 3 (Fig. 1) abgetrennten Werkstückabschnitte entfernt sind und der Anschlag 5 wieder frei geworden ist, können die Werkstücke W vom Schieber 12 um eine weitere Abschnittlänge vorgeschoben werden.Vorzugsweise wird hierzu der Schieber 12 zunächst entgegen der Vorschubrichtung R um eine Wegstrecke zurückversetzt, die unter der Wirkung der Gasfeder (Raum 20) das freie Ausfahren sämtlicher Lamellen 21 gestattet. Anschließend werden diese durch Bewegung des Schiebers 12 in Vorschubrichtung R wieder nacheinander an die Werkstücke W angelegt, so daß diese in der beschriebenen Weise an den Anschlag 5 angelegt werden und ein nächster Sägeschritt vollzogen werden kann.

Es empfiehlt sich, die Rückwärtsbewegung des Schiebers 12 und das Ausfahren der Lamellen 21 in ihre vordere Endstellung bereits auszuführen, sobald die Werkstücke W am Anschlag 5 anliegen und die Spannbacken 6, 7 in Wirkstellung gelangt sind, so daß dann die Werkstücke durch den Schieber 12 keinen in Vorschubrichtung wirkenden Axialdruck mehr erfahren.

Die Wegstrecke, über welche die Lamellen 21 aufgrund der Länge des Raumes 20 frei verschoben werden können, ohne den Schalter 32 zu betätigen, wird als Ausgleichsstrecke bezeichnet. Diese Ausgleichsstrecke muß, wie sich anhand der beschriebenen Funktion ergibt, größer als der größte auftretende Längenunterschied der Werkstücke W sein.

Wie insbesondere aus Fig. 2 hervorgeht, ist am Kasten 15 noch ein zweiter berührungsloser Schalter 37 gelagert, der mit einer Schwenkfahne 38 zusammenwirkt. Die Fahne 38 ist analog zur Fahne 33 wiederum an einer als Winkeleisen ausgebildeten Klappe 39 befestigt, die um eine parallel zur Achse 35 verlaufende Achse schwenkbar ist und sich ebenfalls quer über die Breite des Kastens 15 erstreckt. Diese Klappe nimmt normalerweise aufgrund ihres Eigengewichtes oder aufgrund entsprechender Federvorspannung die in Fig. 2 strichpunktiert angedeutete Stellung ein. Solange sich wenigstens eine der Lamellen 21 in ihrer voll ausgeschobenen Endposition (Fig. 2) befindet, greift die Nase 23 dieser Lamelle derart an der Klappe 39 an, daß diese in ihre mit ausgezogenen Linien dargestellte Lage gelangt, in welcher die Fahne 38 vor dem Schalter 37 liegt. Erst wenn alle Lamellen 21 um eine bestimmte Strecke nach rückwärts verschoben sind und die Klappe 39 freigegeben haben, kann diese in ihre strichpunktiert dargestellte Position gelangen und hierdurch den Schalter 37 zu einem Schaltsignal veranlassen.

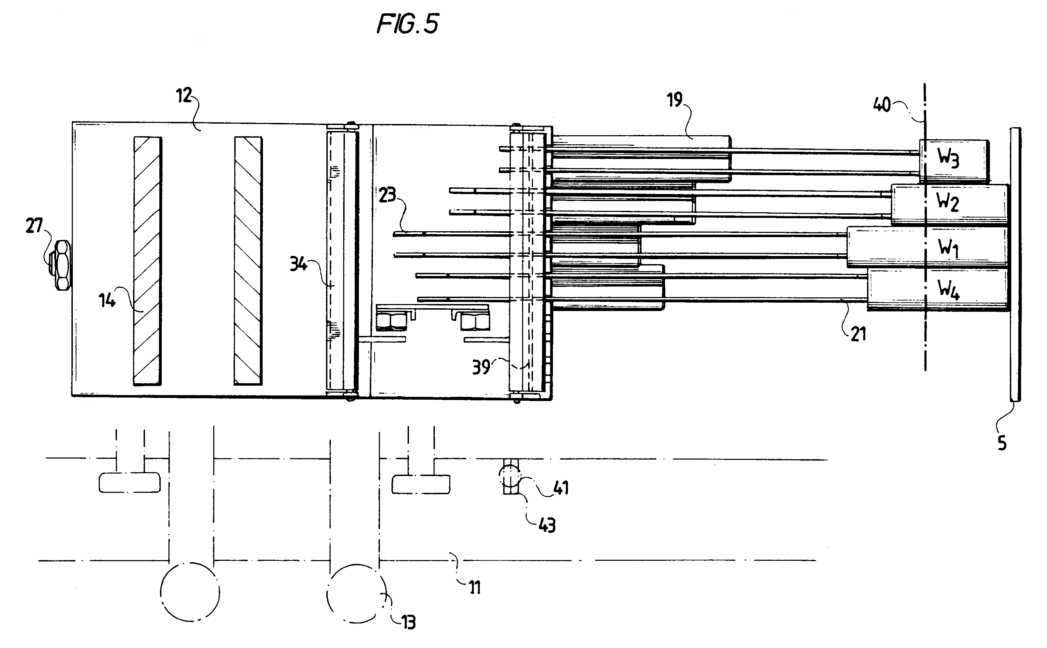

Der zweite Schalter 37 wirkt mit einem dritten Schalter 41 zusammen, der am Maschinengestell 42 fest angeordnet ist. Der Schalter 41 wird durch einen am Schieber 12 vorgesehenen Nocken 43 betätigt. Der Schalter 41 befindet sich in der Nähe des Sägeblatts 3. Die durch das Sägeblatt 3 vermittelte Trennstelle der Werkstücke W ist in Fig. 5 durch eine strichpunktierte Linie 40 angedeutet. Der Zweck der beiden Schalter 37 und 41 liegt darin, einmal sicher zu verhindern, daß die Vorderkanten nicht an Werkstücken anliegender Lamellen 21 in den Bereich des Sägeblattes 3 gelangen, und zum anderen darin, zu kurze Reststücke der Werkstücke zu erkennen, die ein Abschneiden von Abschnitten in der gewünschten Länge nicht mehr zulassen.

Die beiden Schalter 37 und 41 wirken in folgender Weise: Wenn, wie in Fig. 3 dargestellt, eine oder mehrere Lamellen 21 frei sind, d.h. auf ihrem Vorschubweg kein Werkstück vorfinden, bleiben sie während des gesamten Vorschubes des Schiebers 12 in ihrer voll ausgefahrenen Stellung, so daß auch der Schalter 37 nicht anspricht. Der dritte Schalter 41 wirkt als Grenzschalter und ist mit dem zweiten Schalter 37 so zusammengeschaltet, daß der Schalter 41 den Schlittenantrieb 12 abschaltet, wenn gleichzeitig der zweite Schalter 37 nicht angesprochen hat. Der dritte Schalter 41 ist so weit von der Trennstelle 40 entfernt am Maschinengestell 42 angeordnet, daß er vom Nocken 43 betätigt wird, noch bevor die Vorderkante der voll ausgefahrenen Lamellen 21 die Trennstelle 40 erreicht haben.

In analoger Weise erfolgt die Reststückerkennung. Wie Fig. 5 zeigt, sind die Werkstücke W1, W2 und W3 von den an ihnen angreifenden Lamellen 21 bereits in Anlage an den Anschlag 5 gebracht. Das kürzeste Werkstück W3 hat hingegen den Anschlag 5 noch nicht erreicht, so daß die an diesem Werkstück W3 anliegenden Lamellen noch voll ausgefahren sind und dementsprechend die Klappe 39 in der in Fig. 2 dargestellten Position halten, in welcher der zweite Schalter 37 nicht anspricht. Da aber andererseits der Schieber 12 in Fig. 5 bereits eine Position erreicht hat, in welcher der Nocken 43 den Schalter 41 betätigt hat, sind wiederum die beiden Bedingungen für das Abschalten des Schieberantriebs 12 gegeben. In diesemfalle müssen alle Werkstücke W entfernt und neue, längere Werkstücke eingelegt werden, nachdem der Schieber 12 entsprechend weit zurückgefahren ist.

Die beschriebene Vorrichtung kann bei einer abgewandelten, hier nicht dargestellten Ausführungsform auch so gesteuert werden, daß beispielsweise dann, wenn ein erstes Werkstück am Anschlag 5 anliegt, der restliche Vorschub bis zur Betätigung des ersten Schalters 32 im "Schleichgang", also mit wesentlich geringerer Vorschubgeschwindigkeit des Schiebers 12 erfolgt. Dies kann beispielsweise mit Hilfe eines weiteren Schalters erfolgen, der dem Anschlag 5 zugeordnet ist und anspricht, sobald dort ein Werkstück zur Anlage gelangt. In diesem Falle kann der Anschlag 5 aus seiner Sollstellung um ein kurzes Stück zurückgezogen werden, um anschließend wieder in die Scllstellung zurückzukehren.

Bei einer weiteren abgewandelten Ausführungsform der beschriebenen Vorrichtung ist am Schieber eine Abfühl-und Meßeinrichtung zum Erfassen und Messen der Länge des kürzesten Werkstückes vorgesehen. Wenn nämlich von mehreren Werkstücken gleichzeitig nacheinander mehr als ein Abschnitt bestimmter Länge abgetrennt werden soll, richtet sich die Anzahl der überhaupt von jedem Werkstück abtrennbaren Abschnitte naturgemäß nach dem kürzesten Werkstück. Somit kann, wenn dessen Länge bekannt ist, bereits zu Beginn des Ablängvorganges die Anzahl der herstellbaren Abschnitte festgestellt werden. Zum Erfassen und Messen des kürzesten Werkstückes kann man beispielsweise mit Hilfe üblicher Längenmeßeinrichtungen den jeweiligen Abstand des Schiebers 12 vom Anschlag 5 bestimmen und gleichzeitig beim Erreichen der in Fig. 3 dargestellten Stellung die relative Verschiebung der am kürzesten Werkstück W3 angreifenden Lamellen 21 gegenüber dem Kasten 15 bestimmen. Hieraus und aus der absoluten Position des Kastens 15 läßt sich dann die Länge des kürzesten Werkstücks W3 bestimmen.

**Patentansprüche**

1. Vorrichtung zum Vorschieben mehrerer, nebeneinander auf einer Auflage angeordneter Werkstücke (W) gleicher oder unterschiedlicher Länge und zum Anlegen der einen Enden dieser Werkstücke an einen gemeinsamen Anschlag (5) mit einem an einer Geradführung hin- und herbeweglichen Schieber (12), der an das dem Anschlag abgekehrte, andere Werkstückende anlegbar ist, mit einem den Schieber tragenden Schlitten, mit einer Laufschiene (11) für die Führung des Schlittens und mit einem Motor für den Antrieb des Schlittens, **dadurch gekennzeichnet,** daß der Schieber (12) nebeneinander mehrere, an das dem Anschlag (5) abgekehrte Werkstückende anlegbare Lamellen (21) aufweist, die über eine vorgegebene Ausgleichsstrecke parallel zur Vorschubrichtung (R) der Werkstücke (W) hin- und herverschieblich sind; daß die Ausgleichsstrecke größer als der größte auftretende Längenunterschied der Werkstücke (W) ist; daß die Lamellen (21) durch einen Kraftspeicher (20) in Vorschubrichtung vorgespannt sind, und die vom Kraftspeicher ausgeübte Kraft größer als die für den Vorschub der Werkstücke (W) erforderliche Kraft ist, und daß am Schieber (12, 15) ein erster Schalter (32) angeordnet ist, der den Schieberantrieb abschaltet, sobald eine der Lamellen (21) entgegen der Vorschubrichtung (R) über die Ausgleichsstrecke hinaus verschoben ist.

2. Vorrichtung nach Anspruch 1, dadurch gekennzeichnet, daß am Schieber (12, 15) ein zweiter Schalter (37) angeordnet ist, der nur dann anspricht, wenn alle Lamellen (21) entgegen der Vorschubrichtung (R) aus ihrer Ausgangsposition heraus verschoben sind.

3. Vorrichtung nach Anspruch 2, dadurch gekennzeichnet, daß ein dritter Schalter (41) vorgesehen ist, der anspricht, wenn der Schieber (12, 14) eine Grenzposition erreicht hat, und der den Schieberantrieb abschaltet, wenn der zweite Schalter (37) nicht angesprochen hat.

4. Vorrichtung nach Anspruch 1, dadurch gekennzeichnet, daß am Schieber (12, 15) eine Abfühl- und Meßeinrichtung zum Erfassen und Messen der Länge des kürzesten Werkstücks (W3) vorgesehen ist.

5. Vorrichtung nach Anspruch 1, dadurch gekennzeichnet, daß der Kraftspeicher eine Gasfeder (20) ist.

6. Vorrichtung nach Anspruch 5, dadurch gekennzeichnet, daß der Druck der Gasfeder (20) in Abhängigkeit von der erforderlichen Werkstück-Vorschubkraft einstellbar ist.

7. Vorrichtung nach Anspruch 1 oder 2, dadurch gekennzeichnet, daß die Schalter (32, 37) durch quer zur Verschieberichtung der Lamellen (21) verlaufende, schwenkbar gelagerte Klappen (34, 39) betätigt sind, an denen von den Lamellen abstehende Nasen (23) angreifen.

**Claims**

1. A device for advancing a plurality of work pieces (W), which are of the same or different lengths and are arranged adjacent to one another on a supporting surface, and for locating one end of the said work pieces against a common stop (5), comprising a pushing element (12), which is movable to and fro linearly on a guide and which can be located against the other ends, facing away from the stop, of the work pieces, a slidable carriage carrying the pushing element, a slide rail (11) for guiding the slidable carriage and a motor for driving the slidable carriage, characterized in that the pushing element (12) comprises a plurality of adjacent lamellar plates (21) which can be located against the other ends, facing away from the stop (5), of the work pieces and are movable to and fro over a predetermined compensating region parallel to the direction of advancement (R) of the work pieces (W); in that the length of the compensating region is greater than the greatest difference which occurs between the lengths of the work pieces; in that the lamellar plates (21) are biassed in the direction of advancement by means of an energy storage device (20) and the force exerted by the energy storage device is greater than the force necessary for advancing the work pieces, and in that a first switch (32) is arranged on the pushing element (12, 15) which switches off the motor driving the slidable carriage as soon as one of the lamellar plates (21) is pushed beyond the compensating region in the opposite direction to the direction of advancement (R).

2. A device according to claim 1, characterized in that a second switch (37) is located on the pushing element (12, 15) which is only activated when all the lamellar plates (21) are pushed out of their starting position in the opposite direction to the direction of advancement (R).

3. A device according to claim 2, characterized in that a third switch (41) is provided which is activated when the pushing element (12, 15) has reached a limit position and which switches off the motor driving the slidable carriage if the second switch (37) has not been activated.

4. A device according to claim 1, characterized in that a sensing and measuring device is provided on the pushing element (12, 15) for detecting and measuring the length of the shortest work piece (W3).

5. A device according to claim 1, characterized in that the energy storing device is a pneumatic spring (20).

6. A device according to claim 5, characterized in that the pressure in the pneumatic spring (20) can be set according to the force required for advancing the work pieces.

7. A device according to claim 1 or claim 2, characterized in that the switches (32, 37) are activated by pivotably mounted flaps (34, 39), extending at right angles to the direction of displacement of the lamellar plates (21), and by lugs (23), projecting from the lamellar plates, which engage said flaps.

**Revendications**

1. Dispositif pour faire avancer plusieurs pièces à travailler (W) de même longueur ou de longueurs différentes, disposées l'une à côté de l'autre sur une surface d'appui, et pour amener l'une des extrémités de ces pièces à travailler au contact d'une butée commune (5) à l'aide d'un élément pousseur (12) entraîné sur un guidage rectiligne dans un mouvement de va-et-vient , qui peut être amené au contact de l'autre extrémité de la pièce à travailler située à l'opposé de la butée, avec un chariot portant l'élément pousseur, avec un rail de roulement (11) pour le guidage du chariot et avec un moteur pour l'entraînement du chariot, caractérisé en ce que le chariot pousseur (12) présente plusieurs lamelles (21) juxtaposées, pouvant être amenées au contact de l'extrémité de la pièce à travailler située à l'opposé de la butée (5), qui sont déplaçables suivant un mouvement de va-et-vient sur une longueur prédéterminée de parcours de compensation parallèlement à la direction d'avancement (R) des pièces à travailler (W), en ce que le parcours de compensation est plus long que la plus grande différence de longueurs des pièces à travailler (W) qui peut se présenter, en ce que les lamelles (21) sont sollicitées avec précontrainte dans la direction d'avancement par un accumulateur de force (20), la force exercée par l'accumulateur de force étant supérieure à la force qui est nécessaire à l'avancement des pièces à travailler (W), et en ce qu'il est prévu sur le chariot pousseur (12, 15) un premier commutateur (32) qui coupe l'entraînement du chariot pousseur dès que l'une des lamelles (21) est déplacée au-delà du parcours de compensation, dans une direction opposée à la direction d'avancement (R).

2. Dispositif selon la revendication 1, caractérisé en ce qu'est disposé sur le chariot pousseur (12, 15) un deuxième commutateur (37), qui ne fonctionne que lorsque toutes les lamelles (21) ont été déplacées depuis leur position de départ dans une direction opposée à la direction d'avancement (R).

3. Dispositif selon la revendication 2, caractérisé en ce qu'il est prévu un troisième commutateur (41), qui fonctionne lorsque le chariot pousseur (12, 14) a atteint une position de fin de course, et qui coupe l'entraînement du chariot pousseur lorsque le deuxième commutateur (37) n'a pas fonctionné.

4. Dispositif selon la revendication 1, caractérisé, en ce qu'il est prévu sur le chariot pousseur (12, 15) un dispositif de détection et de mesure, pour détecter et mesurer la longueur de la pièce à travailler la plus courte.

5.     Dispositif selon la revendication 1, caractérisé en ce que l'accumulateur de force est un ressort pneumatique (20).

6.     Dispositif selon la revendication 5, caractérisé en ce que la pression du ressort pneumatique (20) est réglable en fonction de la force nécessaire à l'avancement des pièces à travailler.

7.     Dispositif selon la revendication 1 ou 2, caractérisé en ce que les commutateurs (32, 37) sont actionnés par des volets (34, 39) montés pivotants, s'étendant transversalement par rapport à la direction de déplacement des lamelles (21), et sur lesquels agissent des ergots (23) faisant saillie sur les lamelles.

FIG. 1

FIG. 2

FIG. 3

EP 0 297 466 B1

FIG. 4

FIG.5

EP 0 297 466 B1